# EUROPÄISCHE PATENTSCHRIFT

(11) **EP 0 385 434 B1**
(45) Veröffentlichungstag und Bekanntmachung des Hinweises auf die Patenterteilung: **12.05.1993**
(21) Anmeldenummer: 90103897.6
(22) Anmeldetag: 28.02.1990
(51) Int. Cl.: C21C 5/52, F27D 3/00, F27B 3/19, F27D 13/00, C21C 5/56, F27D 11/08

(54) **Einschmelzaggregat mit schachtförmigem Chargiergutvorwärmer**
Smelting unit with a shaft for charging and preheating the charge
Unité de fusion avec une installation de chargement et de préchauffage en forme de cuve

(30) Priorität: 02.03.1989 DE 3906653; 07.12.1989 DE 3940558
(43) Veröffentlichungstag der Anmeldung: 05.09.1990
(73) Patentinhaber: Fuchs Technology AG, CH-6300 Zug (CH)
(72) Erfinder: Ehle, Joachim, D-7606 Lautenbach (DE); Fuchs, Gerhard, D-7640 Kehl-Bodersweier (DE)
(74) Vertreter: Blumbach Weser Bergen Kramer

(56) Entgegenhaltungen:
- EP-A- 0 170 809
- EP-A- 0 291 680
- BE-A- 664 254
- DE-A- 1 937 839
- DE-A- 2 309 343
- DE-C- 910 418

## Beschreibung

Die Erfindung betrifft ein Einschmelzaggregat gemäß dem Oberbegriff des Patentanspruchs 1.

Ein derartiges Einschmelzaggregat ist durch das DE-Gbm 84 12 739 bekannt geworden.

Bei dem bekannten Einschmelzaggregat wird das Chargiergut durch einen schachtförmigen Chargiergutvorwärmer, in einen im Ofengefäß vorhandenen Metallsumpf chargiert. Hierbei besteht das Problem, daß nach dem Abstich und dem erneuten Zünden des Lichtbogens das elektrische Energieeinbringen durch die zu diesem Zeitpunkt hohe Badtemperatur begrenzt ist. Der Restsumpf, der nach dem Abstich im Ofengefäß bleibt, kühlt in dieser kurzen Zeit so wenig ab, daß zur Vermeidung einer Überhitzung des Bades nur eine geringe elektrische Energie eingebracht werden kann. Die für das Einschmelzen verfügbare Leistung kann somit in der Anfangsphase nicht ausgenutzt werden, wodurch sich die Einschmelzzeit entsprechend erhöht.

Zur Verkürzung des Einschmelzprozesses und zum Schutz der Ofenwände ist es erwünscht, jeweils nach einem Abstich das Chargiergut nicht nur an der Seite des Ofengefäßes, an der sich der Chargiergutvorwärmer befindet, einzubringen, sondern über den gesamten Ofenquerschnitt verteilt, oder gezielt auch auf der dem Chargiergutvorwärmer gegenüberliegenden Seite des Ofengefäßes.

Beim Chargieren des Inhalts eines Schrottkorbes unmittelbar in das Ofengefäß entstehen Platzprobleme, durch den auf der einen Seite des Ofengefäßes vorhandenen Schacht des Chargiergutvorwärmers und die auf der anderen Seite des Ofengefäßes vorhandene Elektrodenhub- und -schwenkvorrichtung. Außerdem ist ein solcher Chargiervorgang mit einer Umweltbelastung verbunden.

Aufgabe der Erfindung ist es, ein Einschmelzaggregat der im Oberbegriff des Patentanspruches 1 genannten Art verfügbar zu machen, bei dem ohne Behinderung durch den Schacht das Chargiergut mittels eines Schrottkorbes in den gesamten Ofenquerschnitt eingebracht werden kann, oder gezielt auch auf der dem Chargiergutvorwärmer gegenüberliegenden Seite des Ofengefäßes. Der Chargiervorgang soll mit einer möglichst geringen Umweltbelastung verbunden sein.

Die Aufgabe ist durch die Merkmale des Anspruchs 1 gelöst. Vorteilhafte Ausgestaltungen der Erfindung sind den Unteransprüchen zu entnehmen.

Danach werden die Wände des Chargiergutvorwärmers in dessen unterem Bereich bis zur Höhe des oberen Randes des Ofengefäßes durch einen Teil der Gefäßwand gebildet an dem sich die Chargiergutsäule seitlich abstützen kann und in dem Bereich darüber durch die Wände eines in einer Haltekonstruktion befestigten Schachtes. Die den Schacht tragende Haltekonstruktion und das Ofengefäß sind relativ zueinander bewegbar. Vorzugsweise ist an der Haltekonstruktion der Gefäßdeckel lösbar befestigt. Er bildet dann mit dem Schacht eine konstruktive Einheit. Mit dem Entfernen des Gefäßdekkels läßt sich hierdurch gleichzeitig der Schacht des Chargiergutvorwärmers entfernen und ausreichend Platz für einen Chargiervorgang unmittelbar in das Ofengefäß schaffen.

Die Unterteilung des Chargiergutvorwärmers in einem oberen, in einer Haltekonstuktion befestigten Schacht und einen unteren, durch einen Teil der Gefäßwand gebildeten Abschnitt eröffnet insbesondere bei einer konstruktiven Vereinigung des Schachtes mit dem Deckel weitere, für den Chargier- und Schmelzprozeß vorteilhafte Möglichkeiten. Durch eine horizontale Relativbewegung zwischen Gefäßdeckel und Ofengefäß kann der Schacht selbst zum gezielten Chargieren in das Ofengefäß ausgenutzt werden, wobei die Umweltbelastung beim Chargieren wegen des durch den Deckel weitgehend abgedeckten Ofengefäßes minimal gehalten werden kann. Die horizontale Relativbewegung kann eine Schwenk- oder Linearbewegung des Gefäßdeckels und/oder eine Linearbewegung des Ofengefäßes sein. Der für die horizontale Relativbewegung erforderliche Abstand zwischen oberem Gefäßrand und unterem Gefäßdeckelrand kann entweder durch Anheben des Deckels oder durch Absenken des Gefäßes realisiert werden.

Bei einer besonders vorteilhaften Ausbildung der Erfindung ist das Ofengefäß in einem oberen Rahmen befestigt, der sich über eine Rahmenhubvorrichtung auf einem unteren Traggestell abstützt, das fahrbar ausgebildet ist. Damit können der Gefäßdeckel und der Schacht ortsfest sein. Die Rahmenhubvorrichtung kann beispielsweise durch an den vier Ecken eines rechteckigen Rahmens angeordnete hydraulische Hubzylinder gebildet sein, die paarweise gesteuert sind, und neben einem geringfügigen Anheben und Absenken des Gefäßes ein Kippen zum Abstechen in die eine Richtung und ein Kippen zum Abschlacken des Ofengefäßes in die andere Richtung ermöglichen. Die fahrbare Ausbildung des Traggestelles erlaubt die gewünschte Horizontalverschiebung gegenüber Gefäßdeckel und Schacht, entweder zum Chargieren des Ofengefäßes mit einem Schrottkorb außerhalb des Bereiches des Deckels, oder zum gezielten Chargieren durch den Schacht des Gefäßdeckels in das Ofengefäß. Die gegenseitige horizontale Verschiebung verläuft hierbei vorzugsweise parallel zur Verbindungslinie zwischen Mitte Gefäßdeckel und Mittellinie Schacht und die Kippbewegung zum Abschlacken und Abstechen senkrecht hierzu.

Vorzugsweise ist das Ofengefäß in der Draufsicht als ein auf einer Seite durch eine Gerade begrenztes Oval ausgebildet, wobei der gerade Wandabschnitt zusammen mit angrenzenden Abschnitten des Ovals die Wände des Chargiergutvorwärmers in dessen unteren Bereich bildet.

Die den Elektroden benachbarte Schachtwand kann unter der Deckelunterseite ein Stück fortgesetzt werden, um die Verbindungszone zwischen dem Innenraum des Chargiergutvorwärmers und dem Innenraum des Ofengefäßes zu begrenzen. Das Zurückhalten des in den Schacht des Chargiergutvorwärmers chargierten Materials läßt sich bei vergrößerter Verbindungszone aber auch dadurch begünstigen, daß der Boden des Chargiergutvorwärmers unter einem Neigungswinkel von > 30° und < 60° zum Ofenherd hin abfallend ausgebildet wird.

Um das Gewicht des Schachtes niedrig zu halten, sind dessen Wände vorzugsweise durch wassergekühlte Wandelemente gebildet.

Üblicherweise ist die Elektrodenhubvorrichtung auf der dem Chargiergutvorwärmer gegenüberliegenden Seite des Ofengefäßes neben diesem angeordnet, damit der Schwenkvorgang der Elektroden durch den Schacht nicht behindert wird. Normalerweise befindet sich auch die Deckelhub- und -schwenkvorrichtung auf der Seite der Elektrodenhubvorrichtung. Da bei dem erfindungsgemäßen Einschmelzaggregat jedoch der Schwerpunkt nahe dem Schacht liegt, wird vorzugsweise die Hub- und Schwenkvorrichtung für die Haltekonstruktion des Schachtes, die vorzugsweise auch den Gefäßdeckel trägt, in der Nähe des Chargiergutvorwärmers auf der zur Elektrodenhubvorrichtung entgegengesetzten Seite des Ofengefäßes angeordnet. Es kann auch ein verfahrbares Portal vorgesehen werden, das sich auf Schienen beidseits des Einschmelzaggregates abstützt und dessen Tragbalken die Haltekonstruktion des Schachtes und gegebenenfalls des Gefäßdeckels tragen.

Die Hub- und Schwenkvorrichtung für den Gefäßdeckel kann im Prinzip so ausgebildet werden, wie es in der EP-A-203 339 beschrieben ist. Danach wird auf einem neben dem Chargiergutvorwärmer angeordneten, seitlich verschwenkbaren Drehportal eine Hubvorrichtung befestigt, die wenigstens ein heb- und senkbares Tragglied enthält, das am Deckel angreift. Wird diese Einrichtung so ausgebildet, daß das Tragglied in der abgesenkten Position vom Deckel gelöst ist, dann braucht bei einem kippbaren Ofengefäß die Hub- und Schwenkvorrichtung nicht mitgekippt zu werden, sondern kann als eine auf einem ortsfesten Fundament angeordnete Einheit ausgebildet werden. Selbstverständlich kann aber bei entsprechender Dimensionierung der Ofenwiege die Hub- und Schwenkvorrichtung auf eine mitkippende Ofenplattform aufgesetzt werden.

Bei einer kippbaren Ausführung soll das Ofengefäß senkrecht zu einer die Mitte des Chargiergutvorwärmers mit der Mitte des Ofenherdes verbindenden Achse kippbar sein.

Bei einer Ausbildung der die Haltekonstruktion des Schachtes entfernbaren Vorrichtung als Hub- und Schwenkvorrichtung soll diese zur gleichen Seite bezüglich des Ofengefäßes ausschwenkbar sein, wie die Elektrodenhub- und -schwenkvorrichtung, d.h. die eine Vorrichtung soll im mathematisch positiven und die andere im mathematisch negativen Sinn aus der Betriebsstellung ausschwenkbar sein. Damit wird auf der anderen Seite Platz für einen Chargiervorgang geschaffen.

Es ist im Hinblick auf eine Verkürzung des Einschmelzprozesses und auf Energieersparnis wünschenswert, daß auch das Chargiergut, das nach dem Abstechen entweder durch einen Schrottkorb, oder gezielt über den Schacht des Deckels eingebracht wird, mit Abgasen aus dem Schmelzgefäß vorgewärmt wird. Zu diesem Zweck kann neben dem Chargiergutvorwärmer eine zusätzliche Vorwärmkammer zur Aufnahme eines mit Chargiergut gefüllten Behälters vorgesehen werden, die an den Gasauslaß des schachtförmigen Chargiergutvorwärmers angeschlossen ist, und es erlaubt, auch die heißen Abgase während der Feinungsphase bei entleertem schachtförmigen Chargiergutvorwärmer auszunutzen. Eine zusätzliche Vorwärmkammer erübrigt sich, wenn gemäß einer Weiterbildung dieser Erfindung im Schacht wenigstens ein bewegliches Sperrglied angeordnet wird, das in einer Schließstellung Chargiergut im Schacht zurückhält, wobei ein Gasdurchtritt ermöglicht wird, und in einer Freigabestellung das vorerhitzte Chargiergut freigibt bzw. ein ungehindertes Chargieren durch den Schacht ermöglicht. Diese Lösung ist insofern besonders umweltfreundlich, weil das während der Feinungsphase vorgewärmte Chargiergut ohne vollständige Entfernung des gesamten Gefäßdeckels in das Ofengefäß chargiert werden kann.

Die Erfindung wird durch Ausführungsbeispiele anhand von 12 Figuren näher erläutert. Es zeigen jeweils in schematischer Darstellung
- Fig. 1: teilweise geschnitten eine Seitenansicht eines Einschmelzaggregates,
- Fig. 2: eine Draufsicht des Einschmelzaggregates mit auf dem Ofengefäß sitzenden Deckel und eingefahrenen Elektroden
- Fig. 3: eine der Fig. 2 entsprechende Ansicht mit ausgeschwenktem Deckel und ausgeschwenkten Elektroden
- Fig. 4: ein zweites Ausführungsbeispiel in einer Seitenansicht.
- Fig. 5: teilweise geschnitten eine Seitenansicht eines dritten Ausführungsbeispiels mit verfahrbarem Ofengefäß und Sperrgliedern im Schacht
- Fig. 6 bis 12: in verschiedenen Ansichten ein viertes Ausführungsbeispiel und zwar

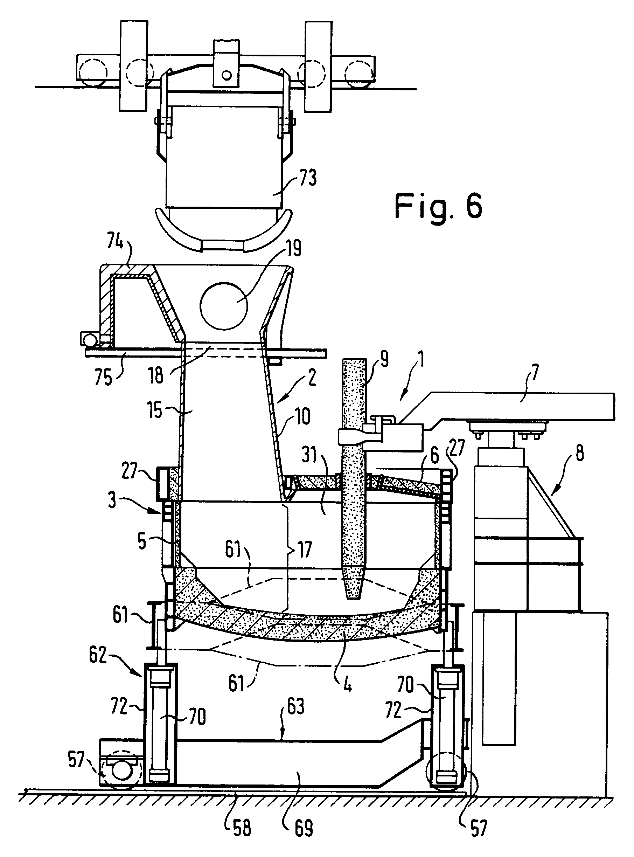

- Fig. 6: eine Seitenansicht in der Grundposition,

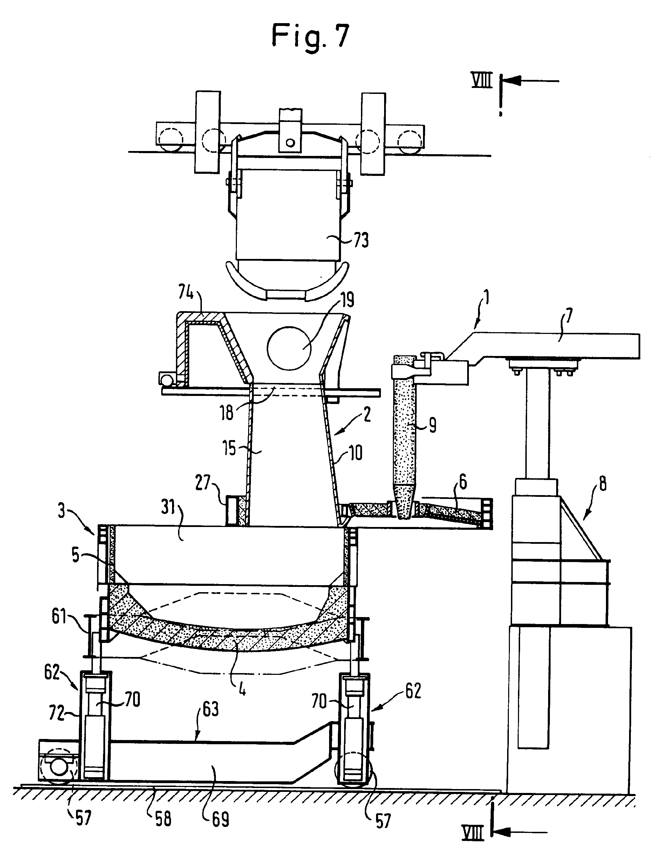

- Fig. 7: eine Seitenansicht mit verschobenen Gefäß

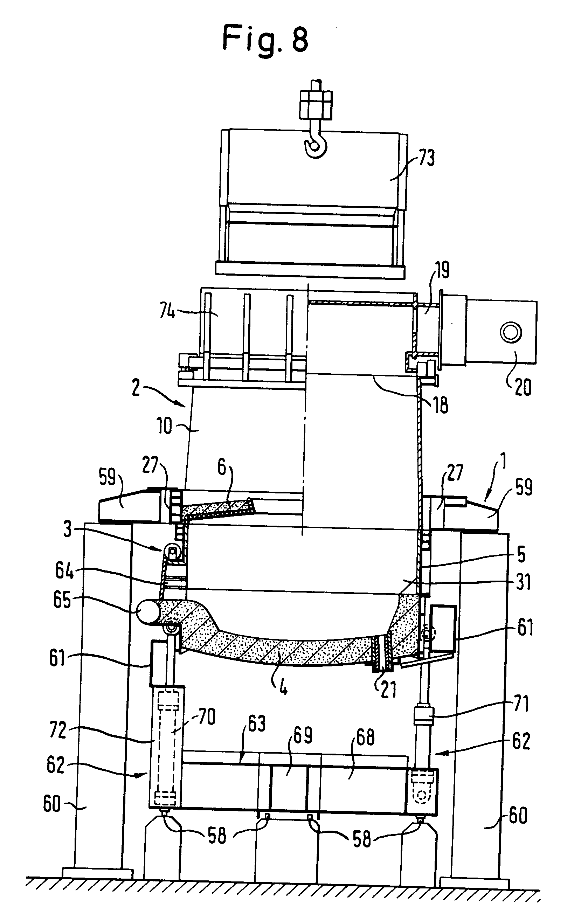

- Fig. 8: die Ansicht VIII-VIII von Fig. 7, teilweise im Schnitt

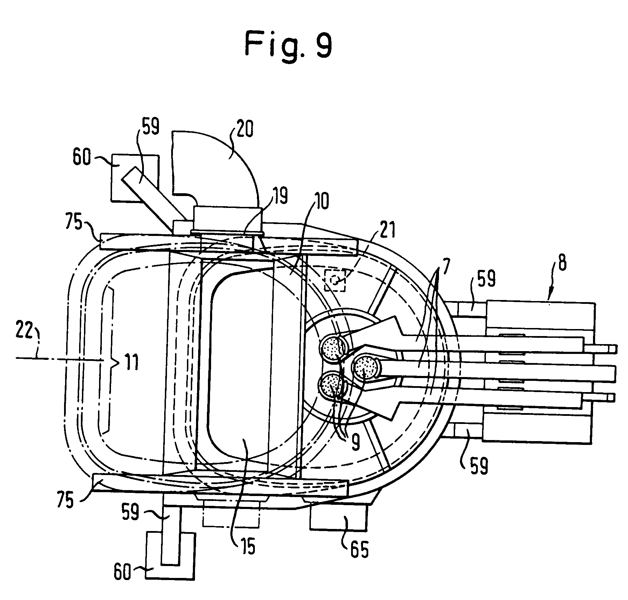

- Fig. 9: eine Draufsicht auf das Einschmelzaggregat

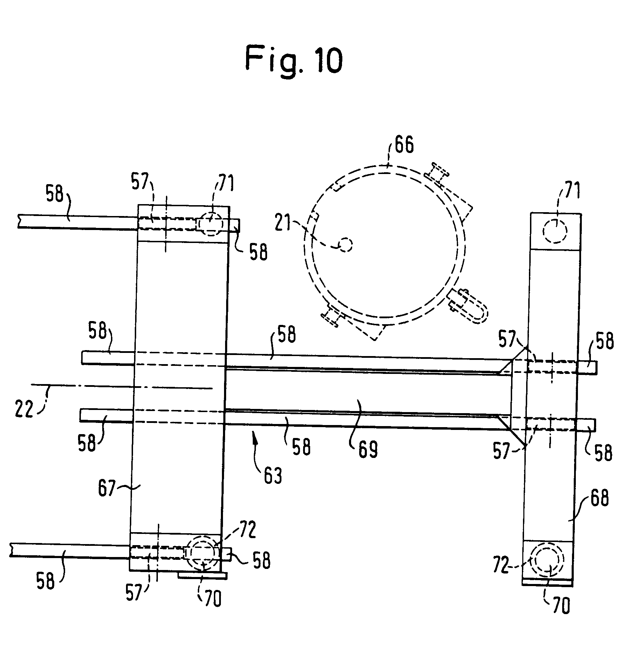

- Fig. 10: eine Draufsicht auf das Traggestell des Ofengefäßes

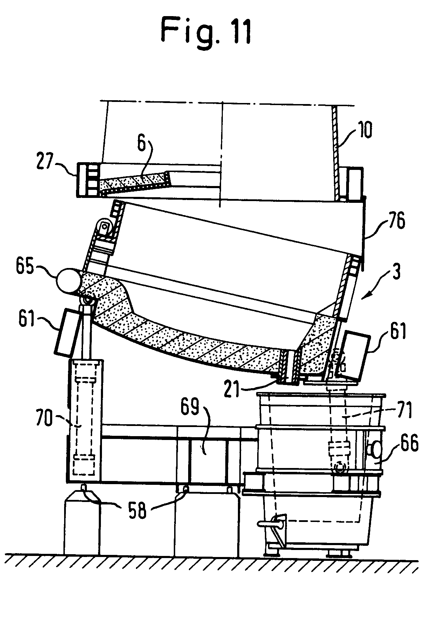

- Fig. 11: das Ofengefäß in der Abstichposition

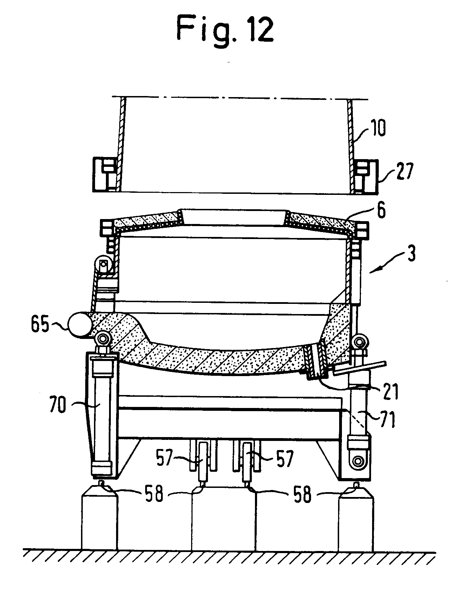

- Fig. 12: das Einschmelzaggregat mit vom Schacht entferntem Gefäßdeckel.

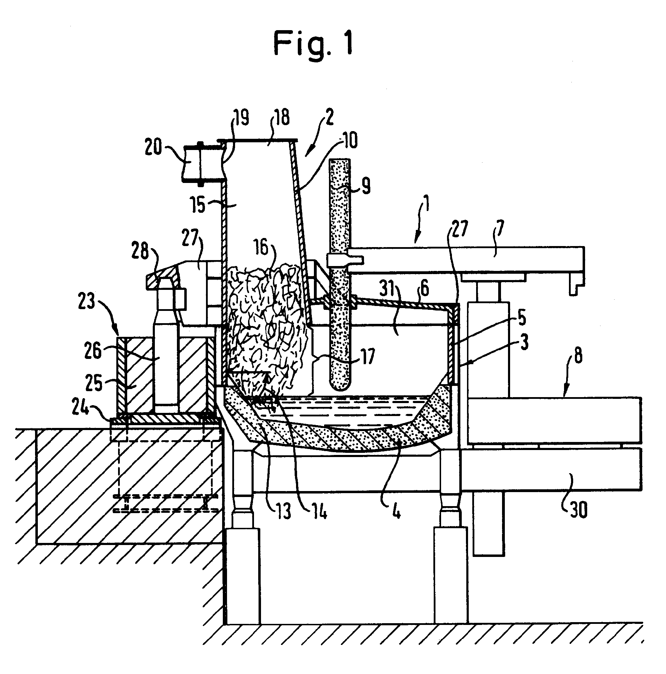

Das in Fig. 1 bis 3 dargestellte Einschmelzaggregat enthält einen Lichtbogenofen 1 und einen schachtförmigen Chargiergutvorwärmer 2. Der Lichtbogenofen enthält ein Ofengefäß 3 aus einem Ofenherd 4 und einer Gefäßwand 5. Das Ofengefäß 3 ist mit einem ausschwenkbaren Deckel 6 verschlossen, durch den drei von Tragarmen 7 getragene, mittels einer Elektrodenhub- und -schwenkvorrichtung 8 anhebbare und seitlich verschwenkbare Elektroden 9 in das Ofengefäß einfahrbar sind. In Fig. 1 ist aus Gründen der Übersichtlichkeit nur eine Elektrode dargestellt.

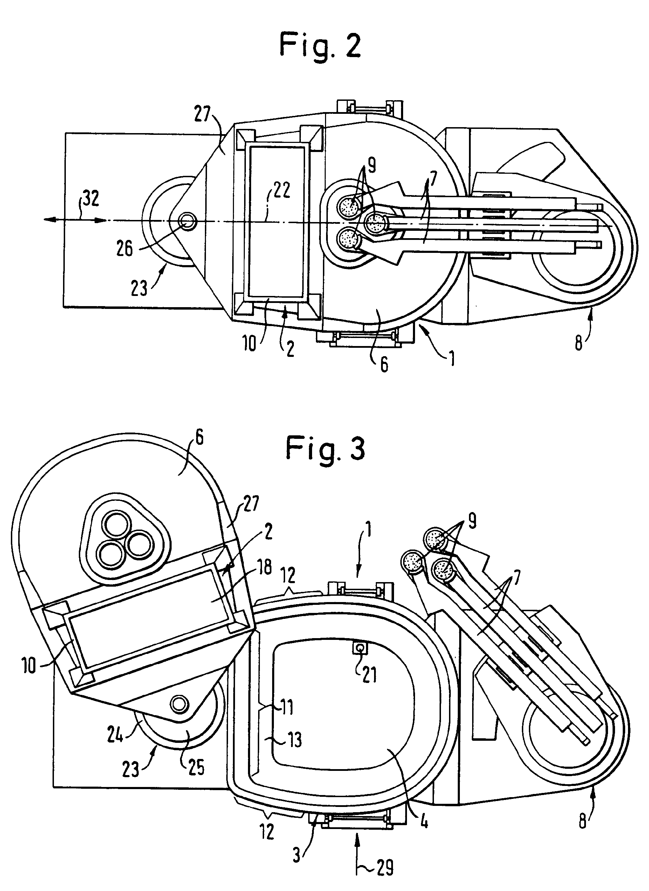

Der Chargiergutvorwärmer 2 ist seitlich am Ofengefäß 3 angeordnet. Im unteren Bereich des Chargiergutvorwärmers, der bis zum oberen Rand der Gefäßwand 5 reicht, sind dessen Außenwände durch die Gefäßwand 5 gebildet. In dem Bereich darüber werden die Wände des Chargiergutvorwärmers durch einen Schacht 10 gebildet, der ebenso wie der Gefäßdeckel 6 in einer Haltekonstruktion 27 befestigt ist und über diese mit dem Gefäßdeckel 6 eine konstruktive Einheit bildet. Wie insbesondere Fig. 3 zeigt, ist das Ofengefäß 3 in der Draufsicht als ein auf einer Seite durch eine Gerade begrenztes Oval ausgebildet. Der gerade Wandabschnitt 11 bildet zusammen mit angrenzenden Abschnitten 12 des Ovals die äußeren Schachtwände im unteren Bereich des Chargiergutvorwärmers. Der ausgemauerte Boden 13 des Chargiergutvorwärmers 2 fällt unter einem Neigungswinkel 14 von etwa 45° zum Boden des ausgemauerten Ofenherdes 4 hin ab.

Die Wände des Schachtes 10 sind aus Gewichtsgründen durch wassergekühlte Wandelemente gebildet. Der Querschnitt des Innenraumes 15 des Schachtes 10 erweitert sich nach unten, um einen störungsfreien Materialfluß des Chargiergutes 16 im Schacht 10 zu gewährleisten.

Im vorliegenden Fall ist der Schacht 10 in der Draufsicht nahezu rechteckig ausgebildet und setzt nach oben den durch die Wandabschnitte 11 und 12 des Ofengefäßes 3 bestimmten Querschnitt des Chargiergutvorwärmers 2 fort. In diesem Fall wird zwischen dem Chargiergutvorwärmer 2 und dem Lichtbogenofen 1 eine Verbindungszone 17 gebildet, die sich über die lichte Höhe und die lichte Weite des Ofengefäßes in der gedachten gemeinsamen Ebene zwischen Chargiergutvorwärmer und Lichtbogenofen erstreckt. Selbstverständlich kann eine von der Rechteckform abweichende Querschnittsform des Schachtes gewählt werden und dieser braucht sich auch nicht über die gesamte Breite des Ofengefäßes bzw. des Dekkels erstrecken. Außerdem kann die zu den Elektroden 9 hinweisende Wand des Schachtes 10 vom Deckelrand aus innerhalb des Ofengefäßes nach unten gezogen sein, um die lichte Höhe der Verbindungszone 17 zu verringern. Beim Entfernen des Deckels muß dieser dann um das betreffende Stück höher angehoben werden, bevor er seitlich verschoben werden kann.

Im oberen Bereich weist der Chargiergutvorwärmer 2 eine verschließbare Beschickungsöffnung 18 sowie einen Gasauslaß 19 auf. Der Gasauslaß 19 ist über ein Gasrohr 20 mit dem Kamin oder einer Vorwärmkammer verbunden die zur Aufnahme eines mit Chargiergut gefüllten Behälters bzw. Schrottkorbs geeignet ist.

Wie aus Fig. 2 hervorgeht, sind bei dem ersten Ausführungsbeispiel die Elektroden 9 in Richtung des Chargiergutvorwärmers 2 versetzt. Hierdurch kann die durch die Lichtbögen erzeugte Strahlungshitze verstärkt auf das über den Chargiergutvorwärmer 2 zugeführte Chargiergut einwirken und gleichzeitig die Strahlungsbelastung der freien Wandbereiche des Lichtbogenofens verringert werden.

Der Ofenherd 4 weist, wie Fig. 3 zeigt, ein exzentrisch angeordnetes Abstichloch 21 auf. Das Ofengefäß 3 ist zum Abstechen in bekannter Weise kippbar ausgebildet, wobei die Kippbewegung senkrecht zu einer die Mitte des Chargiergutvorwärmers mit der Mitte des Ofenherdes verbindenden Achse 22 (siehe Fig. 2) erfolgt.

Bei dem dargestellten Einschmelzaggregat ist die Elektrodenhub- und -schwenkvorrichtung 8 auf der dem Schacht 10 gegenüberliegenden Seite des Gefäßdeckels 6 neben dem Ofengefäß 3 angeordnet und eine Hub- und Schwenkvorrichtung 23 für die Haltekonstruktion 27 und damit auch für den Gefäßdeckel 6 neben dem Chargiergutvorwärmer 2. Die Hub- und Schwenkvorrichtung 23 kann entsprechend dem in der EP-A-203 939 beschriebenen Prinzip ausgestaltet sein. Im dargestellten Fall ist auf einem Drehportal 24 ein Hubzylinder 25 mit einem heb- und senkbaren Tragglied 26 befestigt, das in der abgesenkten Position vom von einer mit dem Gefäßdeckel 6 fest verbundenen Haltekonstruktion 27 gelöst ist und in der angehobenen Position in eine dem Tragglied angepaßte Hebeöse 28 der Haltekonstruktion 27 eingreift. Durch die Hub- und -Schwenkvorrichtung 23 läßt der Schacht 10 zusammen mit dem Deckel 6 anheben und zur Seite schwenken. In Fig. 3 ist die zur Seite geschwenkte Position sowohl des Deckels als auch der Elektroden dargestellt. Es ist ersichtlich daß Gefäßdeckel und Elektroden zur gleichen Seite bezüglich des Ofengefäßes 3, d. h. im dargestellten Fall zur Abstichseite ausschwenkbar sind, so daß von der anderen Seite in der durch einen Pfeil 29 angedeuteten Richtung ein Schrottkorb unbehindert über das offene Ofengefäß 3 gefahren und entleert werden kann.

Als verfahrbares Portal kann anstelle des Drehportals 24 auch ein linear verfahrbares Portal mit einer Hubvorrichtung eingesetzt werden. In diesem Fall ist es vorteilhaft, wenn das die Hubvorrichtung tragende Portal in der in Fig. 2 durch einen Doppelpfeil 32 angedeuteten Richtung verfahrbar ist.

Im dargestellten Fall ist die Elektrodenhub- und -schwenkvorrichtung 8 auf einer mitkippenden Ofenplattform 30 befestigt, die zu diesem Zweck entsprechend stabil dimensioniert sein muß, während die Hub- und Schwenkvorrichtung 23 für die Haltekonstruktion 27 als eine unmittelbar auf dem Fundament stehende Einheit ausgebildet ist. Letzteres ist deshalb möglich, weil im abgesenkten Zustand des Traggliedes 26 die Hub- und Schwenkvorrichtung 23 von der Haltekonstruktion 27 des Gefäßdeckels 6 entkoppelt ist, so daß das Ofengefäß zusammen mit dem Gefäßdeckel ohne Behinderung durch die Hub- und Schwenkvorrichtung 23 gekippt werden kann.

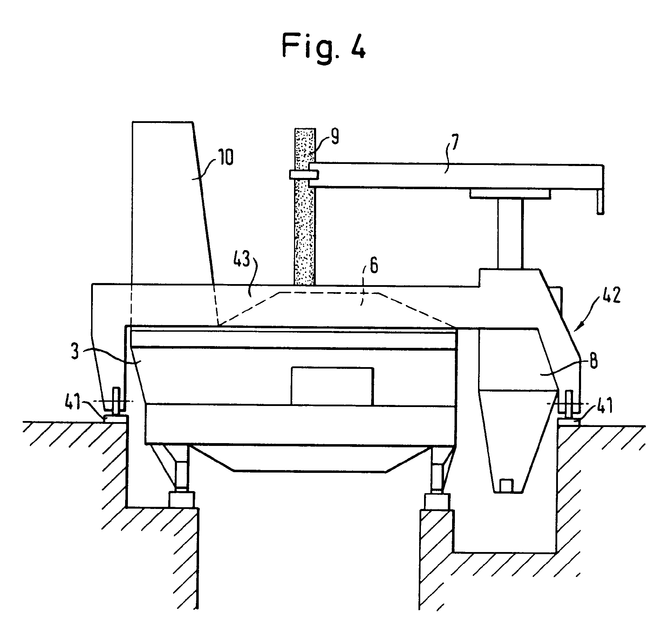

Bei dem in Fig. 4 dargestellten Ausführungsbeispiel wird beim Entfernen des Gefäßdeckels dieser nicht zur Seite geschwenkt, sondern nach dem Anheben zur Seite gefahren. Zu diesem Zweck ist ein auf zwei Schienen 41 verfahrbares Portal 42 vorgesehen. Die Schienen 41 sind beidseits des Einschmelzaggregates auf dem Fundament angebracht. Das verfahrbare Portal 42 überspannt mit zwei Tragbalken 43, von denen in der Ansicht nach Fig. 4 einer vor dem Schacht 10 und einer dahinter angeordnet ist, das Einschmelzaggregat. Im vorliegenden Fall trägt das verfahrbare Portal auch die Elektrodenhub- und -schwenkvorrichtung 8. Die Tragbalken 43 sind über nicht dargestellte, abkoppelbare Hubvorrichtungen an geeigneten Stellen mit dem Gefäßdeckel 6 oder einer Haltekonstruktion des Schachtes 10 verbunden, um Schacht und Gefäßdeckel bei Bedarf anzuheben und zur Seite fahren zu können. Andererseits soll die Kippbewegung beim Abschlacken und Abstechen des Ofengefäßes 3 nicht behindert werden.

Der Lichtbogenofen kann als Wechselstrom oder Gleichstrom-Lichtbogenofen mit mehreren oder einer durch den Gefäßdekkel einfahrbaren Elektrode(n) ausgebildet sein.

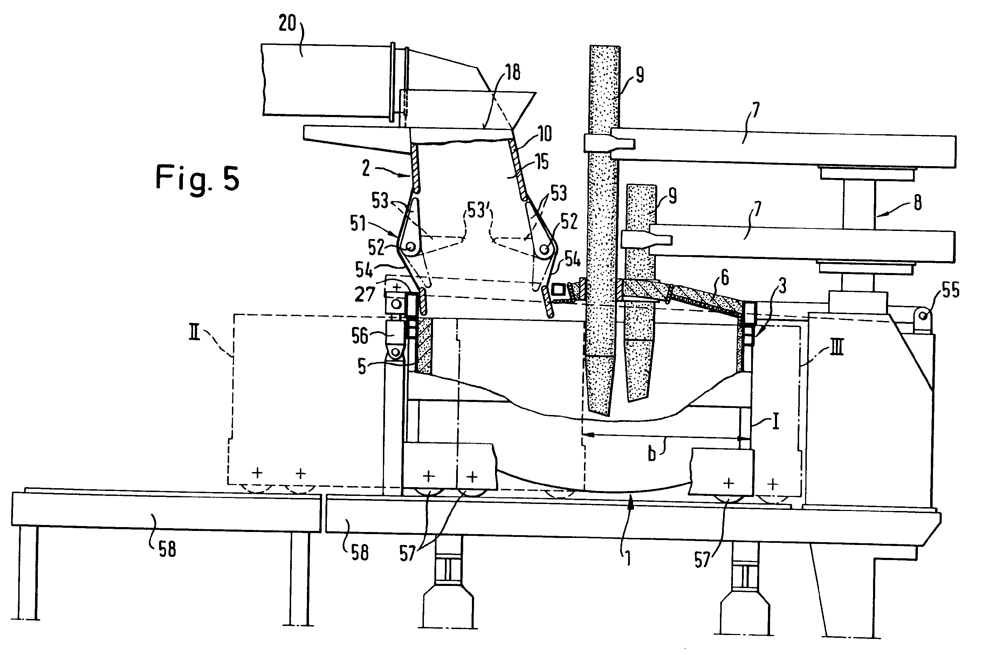

Der in Fig. 5 dargestellte Lichtbogenofen 1 weist ein über Räder 57 auf zwei parallelen Schienen 58 - von denen nur die vordere sichtbar ist - horizontal verschiebbares Ofengefäß 3 auf.

In dem Schacht 10 des Vorwärmers 2 ist ein insgesamt mit 51 bezeichnetes Sperrglied angeordnet. Das Sperrglied 51 besteht aus zwei im wesentlichen in einer gemeinsamen horizontalen Ebene einander gegenüberliegend angeordneten, beispielsweise wassergekühlten Walzen 52, von denen aus sich jeweils eine, in einer gemeinsamen Ebene liegende Reihe von kragarmförmigen Trägern 53 erstreckt. Die Träger 53 sind jeweils gleich ausgebildet und können wie die Walzen 52 wassergekühlt sein.

Die Walzen 52 sind jeweils in Aufnahmen 54 drehbar gelagert. Die nicht dargestellte Lagerung kann beispielsweise unter Verwendung mechanischer Federungselemente oder hydraulischer Dämpfungselemente flexibel ausgestaltet sein. Die Walzen sind über nicht dargestellte Antriebsmittel antreibbar und in vorgebbaren Winkelstellungen arretierbar. Die Aufnahmen 54 sind jeweils durch einen erweiterten Bereich des Chargiergutvorwärmers 2 gebildet, wobei jeweils der entsprechende Wandbereich des Schachtes 10 im Bereich einer Aufnahme 54 nach auswärts verlagert ist, so daß die Walzen 52 mit den zugehörigen Trägern 53 gasdicht innerhalb des Schachtes 10 angeordnet sind.

Die beiden Walzen 52 sind, im wesentlichen simultan, so antreibbar, daß die Träger die in Fig. 5 mit durchgehenden Linien, sowie die mit strichlierten und strichpunktierten Linien dargestellten Stellungen einnehmen können. Mit durchgehenden Linien ist dabei jeweils eine Freigabestellung betreffend die Träger 53 dargestellt, in der sich die Trägerreihen innerhalb der jeweiligen Aufnahme 54 befinden.

In dieser Stellung des Sperrgliedes 51 bzw. der Träger 53 sind diese gänzlich zurückgezogen und es kann eine Chargiergutsäule chargiert werden. Die Chargiergutsäule stützt sich auf den darunterliegenden Boden- und Wandbereich des Ofengefäßes 3 ab.

Die Haltekonstruktion für den Schacht 10 und den Gefäßdekkel 6 ist, an einem dem Chargiergutvorwärmer 2 gegenüberliegenden Endbereich, an der Elektrodenhub- und -schwenkvorrichtung 8 über ein Drehlager 55 schwenkbar gelagert. Dem Drehlager 55 gegenüberliegend greift an der Haltekonstruktion eine Hubvorrichtung 56 bestehend aus einer oder mehreren, vorzugsweise zwei, Kolben-Zylindereinheiten an, um den Deckel 6 mit dem Schacht 10 um das Drehlager 55 und damit gegenüber dem Ofengefäß 3 nach oben zu schwenken. Durch Betätigen der Hubvorrichtung 56 können der Schacht 10 und der Deckel 6 somit aus einer Lage geschwenkt werden, in der sie auf dem oberen Rand des Ofengefäßes 3 aufliegen, und das Gefäß verschließen. In der angehobenen Lage der Haltekonstruktion 27 kann das Ofengefäß 3 über die Räder 57 auf den Schienen 58 mit unterschiedlichem Richtungssinn verschoben werden. Das Ofengefäß 3 kann somit aus der in Fig. 5 mit durchgehenden Linien dargestellten Grundposition I beispielsweise in die links davon gelegene, mit strichlierten Linien dargestellte, Position II, oder in die rechts der Grundposition gelegene, mit strichpunktierten Linien dargestellte Position III, verfahren werden. Entsprechend der jeweiligen Position des Ofengefäßes ändert sich die Zuordnung gegenüber dem Schacht 10. Damit können dem Schacht 10 gezielt unterschiedliche Bereiche des Ofengefäßes 3 zugeordnet werden. Bei der sich in der Grundstellung des Ofengefäßes 3 ergebenden Zuordnung ist der Schacht 10 des Chargiergutvorwärmers 2 zum Chargieren einer Chargiergutsäule oberhalb eines ersten Bereiches des Ofengefäßes 3 angeordnet. Aus dieser Zuordnung ist das Ofengefäß 3 so bewegbar, daß der Schacht 10 einem, im Abstand b befindlichen zweiten Bereich des Ofengefäßes 3 zugeordnet ist; in dieser Stellung befindet sich das Ofengefäß 3 in der Position II. Durch die, durch Verschieben des Ofengefäßes 3 vorgebbare Lagezuordnung zwischen Schacht 10 und Ofengefäß 3 ist es somit möglich, das Einsatzmaterial des Lichtbogenofens abhängig vom jeweiligen Verfahrenszustand bzw. Betriebszustand gezielt in das Ofengefäß 3 zu chargieren.

Ein Verschieben mit entgegengesetztem Richtungssinn in die Position III kann mit dem Zweck erfolgen, eine auf der linken Seite des Ofengefäßes eingebrachte Chargiergutsäule zum schnellen Einschmelzen näher an die Elektroden 9 heranzuführen.

Im folgenden wird ein typischer Verfahrensablauf beschrieben. Bei in ihrer Öffnungsstellung angeordneten Trägern 53 und einer Zuordnung des Schachtes 10 oberhalb des ersten Bereiches des Ofengefäßes 3 ist über den Schacht 10 während einer Einschmelzphase eine Chargiergutsäule chargierbar. Dieser Zuordnung entspricht die in Fig. 5 dargestellte Grundstellung I des Ofengefäßes 3. Nach Beendigung der Einschmelzphase ist die Chargiergutsäule eingeschmolzen und der Chargiergutvorwärmer 2 im wesentlichen leer. Etwaig im Schacht 10, beispielsweise durch eine Brückenbildung, festsitzende Bereiche der Chargiergutsäule können in einfacher Weise durch Verdrehen der Träger 53 und den dabei auf das Chargiergut ausgeübten Druck in das Ofengefäß 3 gefördert werden. Zur Beschleunigung des Einschmelzens kann bereits während oder nach dem Chargieren der Chargiergutsäule das Ofengefäß 3 so bewegt werden, daß der Abstand der Chargiersäule zu den Elektroden 9 verkleinert wird. Das Ofengefäß 3 kann dazu beispielsweise in die Position III verfahren werden. Die Energie der Lichtbögen kann somit gezielt zum Einschmelzen der Chargiergutsäule eingesetzt werden.

Im Verlauf der sich an das Einschmelzen der Chargiergutsäule anschließenden Feinungsphase wird, zur Erzielung einer Metallschmelze mit geforderten Eigenschaften, der Metallschmelze kein Chargiergut zugeführt. Bei dem Einschmelzaggregat nach Fig. 5 ist es möglich, daß in den Schacht 10 bei in ihrer Schließstellung befindlichen Trägern 53 Chargiergut eingebracht wird. Dieses wird durch während der Feinungsphase aus dem Ofengefäß 3 in den Schacht 10 aufsteigendes heißes Gas vorgewärmt. Das Chargiergut steht für eine Beschickung nach einem Abstich des Ofengefäßes 3 zur Verfügung. Damit der in Fig. 5 rechts dargestellte Wandbereich des Ofengefäßes 3 gegenüber zu großer Hitzeeinwirkungen der Elektroden 9 geschützt wird, wird das Chargiergut des Schachtes 10 in das Ofengefäß 3 chargiert, wenn durch Verschieben des Ofengefäßes 3 gegenüber dem im wesentlichen ortsfesten Schacht 10 dieser dem rechten Bereich des Ofengefäßes 3 zugeordnet worden ist. Dieser Zuordnung entspricht die in Fig. 5 dargestellte Position II. Das erhitzte Chargiergut kann dabei dem rechten Bereich des Ofengefäßes 3 zugeführt werden.

Anschließend wird für ein Chargieren in den linken Bereich des Ofengefäßes 3 dieses wieder in die in Fig. 5 mit durchgehenden Linien dargestellte Grundposition I zurückverschoben. Die Träger 53 werden dabei in ihre Freigabestellung gebracht, in der sie das kontinuierliche Chargieren von Chargiergut durch den Schacht 10 nicht behindern.

Somit ist auch während der Feinungsphase das Vorwärmen von Chargiergut innerhalb des Schachtes 10 möglich. Da der Dekkel 6 zum Bewegen des Ofengefäßes 3 nur geringfügig angehoben werden muß, ist während des Vorwärmens und auch des Chargierens sichergestellt, daß keine Umweltbelastungen auftreten.

Bei der in den Fig. 6 bis 12 in verschiedenen Ansichten und Betriebszuständen dargestellten Ausführungsform der Erfindung ist die Haltekonstruktion 27 für den Schacht 10 in der der Gefäßdeckel lösbar befestigt ist, ortsfest mittels Kragarmen 59 auf Fundamentsäulen 60 und dem Elektrodenhub- und -schwenkvorrichtung 8 gelagert (siehe Fig. 8 und 9). Das Ofengefäß 3 ist in einem oberen Rahmen 61 befestigt, der sich über eine Rahmenhubvorrichtung 62 auf einem Traggestell 63 abstützt. Das Traggestell ist parallel zur Verbindungslinie zwischen Mittellinie Schacht und Mitte Ofenherd, das heißt parallel zur Achse 22 (siehe Fig. 9) verfahrbar. Zu diesem Zweck sind bei der Darstellung nach Fig. 6 im Traggestell auf der linken Seite und auf der rechten Seite Räder 57 vorgesehen, die auf Schienen 58 laufen.

Wie bei den vorhergehenden Ausführungsformen ist das Ofengefäß in einer quer, zur die Mittellinie des Chargiergutvorwärmers 2 mit der Mitte des Ofenherdes 4 verbindenden Achse 22 kippbar, und zwar zum Abstechen auf die eine Seite, in der sich nahe dem Rand des Ofenherdes 4 ein Abstichloch 21 befindet, und zum Abschlacken auf die andere Seite, an der eine durch eine anhebbare Türe abschließbare Arbeitsöffnung 64 mit einer Schaffplatte 65 vorgesehen ist. Um beim Abstechen des Ofengefäßes Platz für eine Pfanne 66 (siehe Fig. 11) zu schaffen, ist der obere Rahmen 61 auf dieser Seite nach oben gekröpft (vergleiche gestrichelte Linie in Fig. 6). Auf der gegenüberliegenden Seite ist wegen des Platzbedarfs der Arbeitsöffnung 64 der obere Rahmen 61 nach unten gekröpft (vergleiche strichpunktiere Linie in Fig. 6).

Aus Platzgründen für die Pfanne 66 und einen unterhalb der Schaffplatte anzuordnenden, nicht dargestellten Schlackenwagen, ist auch das Traggestell 63 in besonderer Form ausgebildet. Es weist, wie Fig. 10 zeigt, in der Draufsicht zwei parallele Querträger 67 und 68 und einen diese etwa in der Mitte verbindenden Längsträger 69 auf. Die Laufräder 57 sind jeweils in den Endbereichen des Querträgers 67 und im mittleren Bereich des Querträgers 68 gelagert, wobei auch im mittleren Bereich des Querträgers 68 zwei im Abstand voneinander angeordnete Laufräder 57 vorgesehen sind. Damit können die Schienen für die Laufräder des Querträgers 68 auch in die Mitte verlegt werden, so daß sie weder die Pfanne auf der einen Seite, noch den Schlackenwagen auf der anderen Seite, behindern. Im dargestellten Fall ist die Rahmenhubvorrichtung 62 durch vier am Umfang des Rahmens 61, nämlich im Bereich der Ecken des in der Draufsicht etwa rechteckförmigen Rahmens, angeordnete Hubelemente 70, 71 gebildet. Die Hubelemente bestehen aus hydraulisch betätigbaren Kolben-/Zylindereinheiten. Sie könnten aber auch aus anderen Elementen wie Zahnritzel und mit diesem zusammenwirkender Zahnstange oder aus einem Schraubenspindelantrieb bestehen. Es sind Hubelemente auf beiden Seiten der die Mittellinie des Chargiergutvorwärmers mit der Mitte des Ofenherdes verbindenden Achse 22 vorgesehen, wobei bei dem Ausführungsbeispiel die Hubelemente 71 auf der Abstichseite sowohl im Rahmen 61, als auch im Traggestell 63 um zur Achse 22 parallele Drehachsen schwenkbar sind, während die Hubelemente 70 auf der Schlackenseite (linke Seite in Fig. 8) eine senkrechte Führung aufweisen, und nur im oberen Rahmen 61 über eine zur Achse 22 parallele Drehachse schwenkbar gelagert sind. Die Hubelemente 71 und die Hubelemente 70 sind jeweils synchron steuerbar. Durch synchrones Absenken der Hubelemente 71 läßt sich das Ofengefäß zum Abstechen auf die eine Seite, und durch synchrones Absenken der Hubelemente 70 zum Abschlacken auf die andere Seite kippen. Werden sämtliche Hubelemente synchron abgesenkt, dann läßt sich das Ofengefäß 3 ohne Kippen absenken.

Die senkrechte Führung der Hubelemente 70 ist im dargestellten Fall dadurch verwirklicht, daß die Hydraulikzylinder in fest mit dem Traggestell 63 verbundenen Rohren 72 gehalten sind.

Mit dem beschriebenen Einschmelzaggregat lassen sich die folgenden Verfahrensschritte durchführen.

Nach dem Abstechen einer Schmelze (Fig. 11), wozu die Hubelemente 71 abgesenkt werden, und das Ofengefäß 3 um die oberen Drehachsen der festgehaltenen Hubelemente 70 kippt, werden die Hubelemente 71 wieder bis zur einer Position angehoben, in der noch ein ausreichender Abstand zum unteren Rand des Gefäßdeckels 6 bleibt, damit das Ofengefäß 3 horizontal verschoben werden kann. In dieser Position wird das Traggestell aus der in Fig. 6 dargestellten Position nach links verfahren, bis entweder das gesamte Gefäß außerhalb des Bereichs des Schachtes 10 liegt, um unmittelbar in das Gefäß Chargiergut aus einem Schrottkorb einzubringen, oder nur bis in eine Position, wie sie in Fig. 7 dargestellt ist, um aus einem Chargiergutbehälter 73 über den Schacht 10 Chargiergut in die rechte Hälfte, das heißt in die auf Seiten der Elektroden-Hubvorrichtung liegende Hälfte des Ofengefäßes einzubringen. Diese Position ist in Fig. 9 strichpunktiert dargestellt. Um in dieser Position eine Umweltverschmutzung durch aus der linken Gefäßhälfte entweichende Ofengase zu vermeiden, kann hier in waagrechter Verlängerung des Gefäßdeckels (nach links in Fig. 7), eine nicht dargestellte Abdeckung vorgesehen sein, beispielsweise ein mit dem unteren Rand des Deckels fluchtender und an diesem oder anderweitig befestigtes Abdeckblech. Sodann wird das Ofengefäß wieder in die in Fig. 6 dargestellte Ausgangsstellung zurückgefahren und soweit angehoben, das der gewünschte Abschluß zwischen Ofengefäß und Gefäßdeckel gewährleistet ist. In dieser Position wird durch den Schacht 10 weiteres Chargiergut zugeführt, und hierbei im Schacht eine Schrottsäule aufgebaut, die sich am Boden des Gefäßes und im linken Bereich der Gefäßwand abstützt. Nach dem Schließen des Schachtdeckels 74 der den in Fig. 6 dargestellten Querschnitt in Form eines umgekehrten U aufweist, und auf Schienen 75 horizontal verschiebbar ist, wird die nächste Ofencharge eingeschmolzen und hierbei durch die entstehenden Ofengase die Schrottsäule vorgeheizt. Werden im Schacht 10 Sperrorgane vorgesehen, wie sie anhand von Fig. 5 beschrieben worden sind, dann läßt sich auch während der Feinungsphase aufgeheiztes, im Schacht 10 zurückgehaltenes Chargiergut, an der gewünschten Stelle nach dem Abstich des Ofengefäßes chargieren.

Die horizontale Verfahrbarkeit des Ofengefäßes erlaubt es selbstverständlich auch, während des Einschmelzprozesses die Lichtbogenelektroden näher an die Chargiergutsäule heranzuführen, um hier den Einschmelzprozeß zu beschleunigen. Eine hierdurch bedingte teilweise Öffnung des Gefäßes kann dadurch vermieden werden, daß auch hier in horizontaler Verlängerung des Gefäßdeckelrandes eine Abdeckung (nach rechts in Fig. 7) vorgesehen wird. Ein Austritt von Ofengasen beim Abstechen (siehe Fig. 11) kann beispielsweise durch eine Kettenschürze 76 gebremst werden. Die beim Kippen austretenden Gase können aber auch durch eine ortsfeste Auffanghaube abgesaugt werden.

Die konstruktive Zuordnung des Schachtes 10 zu dem Gefäßdeckel 6 bedeutet nicht, daß der Schacht unlösbar mit dem Gefäßdeckel verbunden sein muß. Es ist vielmehr erwünscht, daß der Deckel bei Beschädigung ausgewechselt werden kann. Aus diesem Grund ist bei dem in den Fig. 6 bis 12 dargestellten Ausführungsbeispiel der Gefäßdeckel 6 lösbar in der sich auf den Fundamentsäulen 60 abstützenden Haltekonstruktion 27 des Schachtes 10 befestigt, so daß nach Lösen dieser Befestigung der Gefäßdeckel, wie in Fig. 12 dargestellt, durch gleichzeitiges Absenken der Hubelemente auf dem oberen Gefäßrand aufliegend abgesenkt, und mit dem Ofengefäß aus dem Bereich des Schachtes 10 (in der Darstellung gemäß Fig. 6 nach links) herausgefahren, und durch einen Kran abgenommen und ersetzt werden kann.

Auch bei dem Beispiel nach den Fig. 1 bis 3 ist es nicht erforderlich, daß der Gefäßdeckel 6 zusammen mit dem Schacht 10 zur Seite geschenkt wird. Es genügt, wenn der Schacht 10 in der Haltekonstruktion 27 befestigt ist und der Gefäßdeckel 6 durch eine eigene Vorrichtung, beispielsweise durch die Elektrodenhub- und -schwenkvorrichtung 8, getragen und mit dieser zur Seite geschwenkt wird.

Ferner ist es nicht erforderlich, daß wie in Fig. 6 dargestellt, die linke Wand des Schachtes 10 mit der darunterliegenden Gefäßwand fluchtet. Sie kann auch etwas zur Dekkelmitte hin versetzt sein. Wesentlich ist, daß sich eine durch den Schacht 10 chargierte Säule an der Wand 5 des Ofengefäßes abstützen kann.

## Patentansprüche

1. Einschmelzaggregat mit
einem Lichtbogenofen (1) der ein Ofengefäß (3) aus einem Ofenherd (4) und einer Gefäßwand (5) sowie einen Gefäßdeckel (6) enthält,
einem seitlich am Ofengefäß (3) angeordneten schachtförmigen Chargiergutvorwärmer (2),
dessen Innenraum (15) in einem an seinen Boden (13) angrenzenden Bereich durch eine Verbindungszone (17) mit dem Innenraum (31) des Lichtbogenofens (1) verbunden ist,
der außerdem in seinem oberen Bereich eine verschließbare Beschickungsöffnung (18) für Chargiergut und einen Gasauslaß (19) aufweist,
dadurch **gekennzeichnet**,
daß die Wände des Chargiergutvorwärmers (2) in dessen unterem Bereich bis zur Höhe des oberen Randes des Ofengefäßes (3) durch einen Teil der Gefäßwand (5) gebildet werden und in dem Bereich darüber durch die Wände eines in einer Haltekonstruktion (27) befestigten Schachtes (10), und daß die Haltekonstruktion (27) und das Ofengefäß (3) relativ zueinander bewegbar sind.

2. Einschmelzaggregat nach Anspruch 1, dadurch **gekennzeichnet** , daß an der Haltekonstruktion (27) der Gefäßdeckel (6) lösbar befestigt ist.

3. Einschmelzaggregat nach Anspruch 1 oder 2, dadurch **gekennzeichnet**, daß die Haltekonstruktion durch eine Hubvorrichtung (23, 56) gegenüber dem Ofengefäß anhebbar ist.

4. Einschmelzaggregat nach Anspruch 1 oder 2, dadurch **gekennzeichnet**, daß das Ofengefäß (3) gegenüber der Haltekonstruktion (27) absenkbar ist.

5. Einschmelzaggregat nach einem der Ansprüche 1 bis 4, dadurch **gekennzeichnet**, daß Haltekonstruktion (27) und Ofengefäß (3) relativ zueinander horizontal verschiebbar sind.

6. Einschmelzaggregat nach Anspruch 5, dadurch **gekennzeichnet**, daß die Richtung der gegenseitigen horizontalen Verschiebung parallel zur Verbindungslinie zwischen Mitte Gefäßdeckel (6) und Mittellinie Schacht (10) verläuft.

7. Einschmelzaggregat nach einem der Ansprüche 1 bis 6, dadurch **gekennzeichnet**, daß im Schacht (10) mindestens ein bewegliches Sperrglied (51) so angeordnet ist, daß es aus einer Schließstellung, in der es eine Auflage für Chargiergut bildet in eine Öffnungs- bzw. Freigabestellung zum Chargieren von Chargiergut in das Ofengefäß (3) bewegbar ist, in der es den Durchtritt von Chargiergut durch den Schacht (10) freigibt.

8. Einschmelzaggregat nach Anspruch 7 dadurch **gekennzeichnet**, daß das Sperrglied (51) durch mindestens eine wassergekühlte, drehbar gelagerte und in mindestens einer Drehrichtung antreibbare sowie in einer vorgebbaren Winkelstellung arretierbare Walze (52) gebildet ist, von der sich mindestens eine Reihe von im wesentlichen in einer Ebene liegenden kragarmförmigen Trägern (53) erstreckt, daß die Träger (53) in der Schließstellung in einer vorgebbaren Winkelstellung angeordnet sind, in der ihre freien Enden (53') in den Innenraum des Schachtes (10) ragen, und daß die Träger (53) in der Öffnungsstellung im wesentlichen in einer unterhalb der Schließstellung liegenden Winkelstellung so angeordnet sind, daß Chargiergut durchtreten kann.

9. Einschmelzaggregat nach Anspruch 8, dadurch **gekennzeichnet**, daß die Träger (53) wassergekühlt sind.

10. Einschmelzaggregat nach einem der Ansprüche 7 bis 9, dadurch **gekennzeichnet**, daß an gegenüberliegenden Wänden des Schachtes (10) in im wesentlichen gleicher Höhe jeweils eine Walze (52) mit Trägern (53) angeordnet ist, deren freie Enden (53') in Schließstellung einander mit Abstand benachbart sind.

11. Einschmelzaggregat nach einem der Ansprüche 1 bis 10, dadurch **gekennzeichnet**, daß das Ofengefäß (3) in der Draufsicht als ein auf einer Seite durch eine Gerade begrenztes Oval ausgebildet ist und der gerade Wandabschnitt (11) zusammen mit angrenzenden Abschnitten (12) des Ovals die Außenwände des Chargiergutvorwärmers (2) in dessen unterem Bereich bildet.

12. Einschmelzaggregat nach Anspruch 11, dadurch **gekennzeichnet**, daß die Gerade das Oval zwischen 3/4 und 9/10 seiner Länge begrenzt.

13. Einschmelzaggregat nach einem der Ansprüche 1 bis 12, dadurch **gekennzeichnet**, daß die Wände des Schachtes (10) durch wassergekühlte Wandelemente gebildet sind.

14. Einschmelzaggregat nach einem der Ansprüche 1 bis 13, dadurch **gekennzeichnet**, daß sich der Querschnitt des Innenraums (15) des Schachtes (10) nach unten erweitert.

15. Einschmelzaggregat nach einem der Ansprüche 1 bis 14, dadurch **gekennzeichnet**, daß auf der zum Chargiergutvorwärmer (2) entgegengesetzten Seite des Gefäßdeckels (6) neben dem Ofengefäß (3) eine Elektrodenhub- und -schwenkvorrichtung (8) angeordnet ist.

16. Einschmelzaggregat nach einem der Ansprüche 1 bis 15, dadurch **gekennzeichnet**, daß auf der Seite des Chargiergutvorwärmers (2) neben dem Ofengefäß (3) eine Vorrichtung (23) zum Entfernen der Haltekonstruktion (27) für den Schacht 10 angeordnet ist.

17. Einschmelzaggregat nach Anspruch 15 und 16, dadurch **gekennzeichnet**, daß die Vorrichtung zum Entfernen der Haltekonstruktion (27) als Hub- und Schwenkvorrichtung (23) ausgebildet ist und diese und die Elektrodenhub- und -schwenkvorrichtung zur gleichen Seite bezüglich des Ofengefäßes (3) ausschwenkbar sind.

18. Einschmelzaggregat nach einem der Ansprüche 1 bis 17, dadurch **gekennzeichnet**, daß auf einem neben dem Chargiergutvorwärmer (2) angeordneten verfahrbaren Portal (24) eine Hubvorrichtung (25) befestigt ist, die wenigstens ein heb- und senkbares Tragglied (26) enthält, das an der Haltekonstruktion (27) oder bei an der Haltekonstruktion (27) befestigten Gefäßdeckel (6) am Rand des Dekkels angreift.

19. Einschmelzaggregat nach Anspruch 18, dadurch **gekennzeichnet**, daß das Tragglied (26) in der abgesenkten Position vom Rand des Deckels (6) bzw. von der Haltekonstruktion (27) gelöst ist und beim Anheben in eine der Form des Traggliedes angepaßte Hebeöse (28) am Rand des Deckels bzw. der Haltekonstruktion (27) eingreift.

20. Einschmelzaggregat nach Anspruch 18 oder 19, dadurch **gekennzeichnet**, daß das verfahrbare Portal als Drehportal (24) ausgebildet ist.

21. Einschmelzaggregat nach einem der Ansprüche 1 bis 20, dadurch **gekennzeichnet**, daß das Ofengefäß (3) senkrecht zu einer die Mittellinie des Chargiergutvorwärmers (2) mit der Mitte des Ofenherdes (4) verbindenden Achse (22) kippbar ist.

22. Einschmelzaggregat nach einem der Ansprüche 18 bis 21, dadurch **gekennzeichnet**, daß das verfahrbare Portal (24) auf einem ortsfesten Fundament angeordnet ist.

23. Einschmelzaggregat nach einem der Ansprüche 1 bis 16, **gekennzeichnet** durch ein verfahrbares Portal (42) mit wenigstens einem den Gefäßdeckel (6) überspannenden Tragbalken (43) und Hubvorrichtungen, die lösbar mit der Haltekonstruktion (27) oder mit dem Gefäßdeckel (6) verbindbar sind.

24. Einschmelzaggregat nach Anspruch 23, dadurch **gekennzeichnet**, daß das verfahrbare Portal (42) die Elektrodenhub- und -schwenkvorrichtung (8) trägt.

25. Einschmelzaggregat nach einem der Ansprüche 1 bis 24, dadurch **gekennzeichnet**, daß das Ofengefäß (3) in einem oberen Rahmen (61) befestigt ist, der sich über eine Rahmenhubvorrichtung (62) auf einem Traggestell (63) abstützt.

26. Einschmelzaggregat nach Anspruch 25, dadurch **gekennzeichnet**, daß das Traggestell (63) fahrbar ausgebildet ist.

27. Einschmelzaggregat nach Anspruch 25 oder 26, dadurch **gekennzeichnet**, daß die Rahmenhubvorrichtung (62) durch wenigstens drei, am Umfang des Rahmens (61) verteilt angeordnete Hubelemente (70, 71) gebildet ist.

28. Einschmelzaggregat nach Anspruch 27, dadurch **gekennzeichnet**, daß die Hubelemente (70, 71) durch hydraulisch oder pneumatisch betätigbare Kolben-/Zylindereinheiten gebildet sind.

29. Einschmelzaggregat nach einem der Ansprüche 25 bis 28, in Verbindung mit Anspruch 21, dadurch **gekennzeichnet**, daß die Hubelemente (70, 71) auf beiden Seiten der die Mittellinie des Chargiergutvorwärmers (2) mit der Mitte des Ofenherdes (4) verbindenden Achse (22) angeordnet sind, und das oder die Hubelemente (71) der einen Seite sowohl im Rahmen (61) als auch im Traggestell (63) um zur Achse (22) parallele Drehachsen schwenkbar gelagert sind, während das oder die Hubelemente auf der anderen Seite eine senkrechte Führung (72) aufweisen.

30. Einschmelzaggregat nach einem der Ansprüche 25 bis 29, dadurch **gekennzeichnet**, daß das Traggestell (63) zwei parallele Querträger (67, 68) und einen diese etwa in der Mitte verbindenden Längsträger (69) aufweist.

31. Einschmelzaggregat nach Anspruche 30 in Verbindung mit Anspruch 21, dadurch **gekennzeichnet**, daß der Längsträger (69) parallel zur Achse (22) verläuft.

32. Einschmelzaggregat nach einem der Ansprüche 27 bis 31, dadurch **gekennzeichnet**, daß der Rahmen (61) in der Draufsicht im wesentlichen rechteckig ausgebildet ist, und die Hubelemente (70, 71) jeweils im Bereich der Ecken dieses Rahmens angeordnet sind.

33. Einschmelzaggregat nach einem der Ansprüche 30 bis 32, dadurch **gekennzeichnet**, daß das Traggestell (63) jeweils Laufräder (57) in den Endbereichen des einen Querträger (67) und im mittleren Bereich des anderen Querträgers (68) aufweist.

34. Einschmelzaggregat nach einem der Ansprüche 30 bis 33, dadurch **gekennzeichnet**, daß der Rahmen (61) auf der Abstichseite des Ofengefäßes nach oben und auf der Seite der Schlackenöffnung nach unten gekröpft ist.

35. Einschmelzaggregat nach einem der Ansprüche 25 bis 34, dadurch **gekennzeichnet**, daß die Haltekonstruktion (27) ortsfest ausgebildet ist.

## Claims

1. A smelting plant comprising
an electric arc furnace (1) which includes a furnace vessel (3) comprising a furnace hearth (4) and a vessel wall (5), and a vessel cover (6),
a shaft-like charging material preheater (2) which is arranged laterally on the furnace vessel (3) and
whose interior (15) is connected in a region adjoining its floor (13) by a connecting zone (17) to the interior (31) of the electric arc furnace (1) and
which in addition in its upper region has a closable loading-opening (18) for charging material and a gas outlet (19),
characterised in that
the walls of the charging material preheater (2) are formed in the lower region thereof as far as the height of the upper edge of the furnace vessel (3) by a part of the vessel wall (5) and in the region above same by the walls of a shaft (10) which is fixed in a holding structure (27), and that the holding structure (27) and the furnace vessel (3) are movable relative to each other.

2. A smelting plant according to claim 1 characterised in that the vessel cover (6) is releasably fixed to the holding structure (27).

3. A smelting plant according to claim 1 or claim 2 characterised in that the holding structure (27) can be lifted relative to the furnace vessel by a lifting apparatus (23, 56).

4. A smelting plant according to claim 1 or claim 2 characterised in that the furnace vessel (3) can be lowered relative to the holding structure (27).

5. A smelting plant according to one of claims 1 to 4 characterised in that the holding structure (27) and the furnace vessel (3) are horizontally displaceable relative to each other.

6. A smelting plant according to claim 5 characterised in that the direction of the horizontal displacement relative to each other is parallel to the connecting line between the middle of the vessel cover (6) and the centre line of the shaft (10).

7. A smelting plant according to one of claims 1 to 6 characterised in that at least one movable blocking member (51) is so arranged in the shaft (10) that it is movable from a closed position in which it forms a support means for charging material into an open or release position for charging of charging material into the furnace vessel (3), in which release position it releases the passage of charging material through the shaft (10).

8. A smelting plant according to claim 7 characterised in that the blocking member (51) is formed by at least one watter-cooled, rotatably mounted roller (52) which is drivable in at least one direction of rotation and which can be arrested in a predeterminable angular position and from which there extends at least one row of cantilever carriers (53) which are disposed substantially in one plane, that the carriers (53) are arranged in the closed position in a predeterminable angular position in which their free ends (53') project into the interior of the shaft (10), and that the carriers (53) are arranged in the open position substantially in an angular position beneath the closed position, in such a way that charging material can pass through.

9. A smelting plant according to claim 8 characterised in that the carriers (53) are water-cooled.

10. A smelting plant according to one of claims 7 to 9 characterised in that arranged at oppositely disposed walls of the shaft (10) at substantially the same level are respective rollers (52) with carriers (53), the free ends (53') of which are disposed adjacent to each other at a spacing from each other in the closed position.

11. A smelting plant according to one of claims 1 to 10 characterised in that in plan view the furnace vessel (3) is in the form of an oval which is delimited on one side by a straight line and the straight wall portion (11) together with adjoining portions (12) of the oval forms the outside walls of the charging material preheater (2) in the lower region thereof.

12. A smelting plant according to claim 11 characterised in that the straight line delimits the oval between three quarters and nine tenths of its length.

13. A smelting plant according to one of claims 1 to 12 characterised in that the walls of the shaft (10) are formed by water-cooled wall elements.

14. A smelting plant according to one of claims 1 to 13 characterised in that the cross-section of the interior (15) of the shaft (10) is enlarged downwardly.

15. A smelting plant according to one of claims 1 to 14 characterised in that an electrode lifting and pivoting apparatus (8) is arranged beside the furnace vessel (3) on the side of the vessel cover (6), which is in opposite relationship to the charging material preheater (2).

16. A smelting plant according to one of claims 1 to 15 characterised in that a means (23) for removal of the holding structure (27) for the shaft (10) is arranged on the side of the charging material preheater (2) beside the furnace vessel (3).

17. A smelting plant according to claim 15 and claim 16 characterised in that the means for removal of the holding structure (27) is in the form of a lifting and pivoting apparatus (23) and said apparatus and the electrode lifting and pivoting apparatus can be pivoted out to the same side with respect to the furnace vessel (3).

18. A smelting plant according to one of claims 1 to 17 characterised in that fixed on a mobile portal assembly (24) arranged beside the charging material preheater (2) is a lifting apparatus (25) which includes at least one support member (26) which can be raised and lowered and which engages the holding structure (27) or, in the case of a vessel cover (6) which is fixed to the holding structure (27), the edge of the cover.

19. A smelting plant according to claim 18 characterised in that in the lowered position the support member (26) is released from the edge of the cover (6) or from the holding structure (27) and when it is lifted it engages into a lifting eye (28) at the edge of the cover or the holding structure (27), the lifting eye being adapted to the shape of the support member.

20. A smelting plant according to claim 18 or claim 19 characterised in that the mobile portal assembly is in the form of a rotary portal assembly (24).

21. A smelting plant according to one of claims 1 to 20 characterised in that the furnace vessel (3) is tiltable perpendicularly to a line (22) connecting the centre line of the charging material preheater (2) to the centre of the furnace hearth (4).

22. A smelting plant according to one of claims 18 to 21 characterised in that the mobile portal assembly (24) is arranged on a stationary foundation.

23. A smelting plant according to one of claims 1 to 16 characterised by a mobile portal assembly (42) with at least one support beam (43) which extends over the vessel cover (6), and lifting devices which are releasably connectable to the holding structure (27) or to the vessel cover (6).

24. A smelting plant according to claim 23 characterised in that the mobile portal assembly (42) carries the electrode lifting and pivoting apparatus (8).

25. A smelting plant according to one of claims 1 to 24 characterised in that the furnace vessel (3) is fixed in an upper frame (61) which is supported on a support structure (63) by way of a frame lifting apparatus (62).

26. A smelting plant according to claim 25 characterised in that the support structure (63) is adapted to be movable.

27. A smelting plant according to claim 25 or claim 26 characterised in that the frame lifting apparatus (62) is formed by at least three lifting elements (70, 71) which are arranged in a distributed array at the periphery of the frame (61).

28. A smelting plant according to claim 27 characterised in that the lifting elements (70, 71) are formed by hydraulically or pneumatically actuable piston-cylinder units.

29. A smelting plant according to one of claims 25 to 28 in conjunction with claim 21 characterised in that the lifting elements (70, 71) are disposed on both sides of the line (22) connecting the centre line of the charging material preheater (2) to the centre of the furnace hearth (4), and the lifting element or elements (71) at one side are mounted pivotably about axes of rotation which are parallel to the line (22), both in the frame (61) and also in the support structure (63), while the lifting element or elements on the other side have a vertical guide means (72).

30. A smelting plant according to one of claims 25 to 29 characterised in that the support structure (63) has two parallel transverse bearers (67, 68) and a longitudinal bearer (69) which connects same approximately at the middle.

31. A smelting plant according to claim 30 in conjunction with claim 21 characterised in that the longitudinal bearer (69) extends parallel to the line (22).

32. A smelting plant according to one of claims 27 to 31 characterised in that in plan view the frame (61) is of substantially rectangular configuration and the lifting elements (70, 71) are respectively arranged in the regions of the corners of said frame.

33. A smelting plant according to one of claims 30 to 32 characterised in that the support structure (63) has respective wheels (57) in the end regions of the one transverse bearer (67) and in the middle region of the other transverse bearer (68).

34. A smelting plant according to one of claims 30 to 33 characterised in that the frame (61) is displaced upwardly on the tapping side of the furnace vessel and downwardly on the side of the slag opening.

35. A smelting plant according to one of claims 25 to 34 characterised in that the holding structure (27) is stationary.

## Revendications

1. Installation de fusion comprenant
un four à arc (1), qui comporte une cuve de four (3) constituée d'une sole de four (4) et d'une paroi de cuve (5), ainsi qu'un couvercle de cuve (6),
un dispositif de préchauffage (2) de la charge, en forme de puits, prévu latéralement sur la cuve de four (3),
dont l'intérieur (15) communique, dans une partie adjacente à son fond (13), par une zone de mise en communication (17) avec l'intérieur (31) du four à arc (1),
qui comporte en outre, dans sa partie supérieure, une ouverture (18) de chargement de la charge, qui peut être fermée, et une sortie (19) pour les gaz,
caractérisée
en ce que les parois du dispositif de préchauffage (2) de la charge sont formées dans sa partie inférieure jusqu'au niveau du bord supérieur de la cuve du four (3) par une partie de la paroi de la cuve (5) et, dans la partie au-dessus, par les parois d'un puits (10) fixé dans une construction servant de support (27), et en ce que la construction servant de support (27) et la cuve du four (3) sont mobiles l'une par rapport à l'autre.

2. Installation de fusion suivant la revendication 1, caractérisée en ce que le couvercle de la cuve (6) est fixé de manière amovible à la construction servant de support (27).

3. Installation de fusion suivant la revendication 1 ou 2, caractérisée en ce que la construction servant de support peut être soulevée par un dispositif de levage (23, 56) par rapport à la cuve du four.

4. Installation de fusion suivant la revendication 1 ou 2, caractérisée en ce que la cuve du four (3) peut être abaissée par rapport à la construction servant de support (27).

5. Installation de fusion suivant l'une des revendications 1 à 4, caractérisée an ce que la construction servant de support (27) et la cuve du four (3) peuvent coulisser horizontalement l'une par rapport à l'autre.

6. Installation de fusion suivant la revendication 5, caractérisée en ce que la direction du coulissement horizontal réciproque s'étend parallèlement à la droite de liaison comprise entre le milieu du couvercle (6) de la cuve et la ligne médiane du puits (10).

7. Installation de fusion suivant l'une des revendications 1 à 6, caractérisée en ce que dans le puits (10) est disposé au moins un organe mobile d'obturation (51), de manière à pouvoir passer d'une position de fermeture dans laquelle il forme un support pour la charge, à une position d'ouverture ou de dégagement de chargement de la charge dans la cuve (3) du four, position dans laquelle il dégage le passage de la charge dans le four (10).

8. Installation de fusion suivant la revendication 7, caractérisée en ce que l'organe d'obturation (51) est formé d'au moins un rouleau (52) à refroidissement par de l'eau, monté tournant, pouvant être entraîné dans au moins un sens de rotation avec possibilité d'être bloqué en une position angulaire prescrite, à partir duquel s'étendent au moins une rangée de supports (53) en porte-à-faux et se trouvant sensiblement dans un plan, en ce que les supports (53) sont disposés en la position de fermeture en une position angulaire prescrite dans laquelle leurs extrémités libres (53') font saillie à l'intérieur du puits (10) et en ce que les supports (53) sont disposés en la position d'ouverture sensiblement à une position angulaire se trouvent en-dessous de la position de fermeture de manière que la charge puisse passer.

9. Installation de fusion suivant la revendication 8, caractérisée en ce que les supports (53) sont refroidis par de l'eau.

10. Installation de fusion suivant l'une des revendications 7 à 9, caractérisée en ce que sur des parois opposées du puits (10) et sensiblement au même niveau, sont disposés des rouleaux (52) à supports (53), dont les extrémités libres (53') sont voisines, tout en étant à une certaine distance l'une de l'autre dans la position de fermeture.

11. Installation de fusion suivant l'une des revendications 1 à 10, caractérisée en ce que la cuve (3) de four a, en vue en plan, la forme d'un ovale délimité d'un côté par une droite et le tronçon de paroi (11) rectiligne forme, avec des tronçons (12) adjacents de l'ovale, les parois extérieures de la partie inférieure du dispositif de préchauffage (2) de la charge.

12. Installation de fusion suivant la revendication 11, caractérisée en ce que la droite délimite l'ovale sur 3/4 à 9/10 de sa longueur.

13. Installation de fusion suivant l'une des revendications 1 à 12, caractérisée en ce que les parois du puits (10) sont formées par des éléments de paroi à refroidissement par de l'eau.

14. Installation de fusion suivant l'une des revendications 1 à 13, caractérisée en ce que la section transversale de l'intérieur (15) du puits (10) s'élargit vers le bas.

15. Installation de fusion suivant l'une des revendications 1 à 14, caractérisée en ce que du côté du couvercle (6) de la cuve, opposé au dispositif de préchauffage (2) de la charge, est disposé, à côté de la cuve (3) du four, un dispositif (8) de soulèvement et d'abaissement des électrodes.

16. Installation de fusion suivant l'une des revendications 1 à 15, caractérisée en ce que du côté du dispositif de préchauffage (2) de la charge, est disposé, à côté de la cuve (3) du four, un dispositif (23) destiné à éloigner la construction servant de support (27) au puits (10).

17. Installation de fusion suivant les revendications 15 et 16, caractérisée en ce que le dispositif destiné à éloigner la construction servant de support (27) est constitué en dispositif de soulèvement et d'abaissement (23), et celui-ci et le dispositif de soulèvement et d'abaissement des électrodes peuvent basculer du même côté par rapport à la cuve (3) du four.

18. Installation de fusion suivant l'une des revendications 1 à 17, caractérisée en ce que sur un portique (24) mobile, disposé à côté du dispositif de préchauffage (2) de la charge, est fixé un dispositif de levage (25) qui comporte au moins un organe porteur (26) pouvant être soulevé et abaissée, lequel attaque la construction servant de support (27) ou, dans le cas d'un couvercle (6) de cuve fixé à la construction servant de support (27), attaque le bord du couvercle.

19. Installation de fusion suivant la revendication 18, caractérisée en ce que l'organe porteur (26) est détaché en la position abaissée du bord du couvercle (6) ou de la construction servant de support (27) et, lors du soulèvement, pénètre dans un oeillet de levage (28) du bord du couvercle ou de la construction servant de support (27), qui est adapté à la forme de l'organe porteur.

20. Installation de fusion suivant la revendication 18 ou 19, caractérisée en ce que le portique mobile est constitué en portique (24) tournant.

21. Installation de fusion suivant l'une des revendications 1 à 20, caractérisée en ce que la cuve (3) du four peut basculer perpendiculairement à un axe (22) reliant la ligne médiane du dispositif de préchauffage (2) de la charge au centre de la sole (4) du four.

22. Installation de fusion suivant l'une des revendications 18 à 21, caractérisée en ce que le portique (24) mobile est monté sur une semelle fixe.

23. Installation de fusion suivant l'une des revendications 1 à 16, caractérisé par un portique (42) mobile ayant au moins une poutre porteuse (43) recouvrant le couvercle (6) de la cuve et des dispositifs de levage qui sont reliés de manière amovible à la construction servant de support (27) ou au couvercle (6) de la cuve.

24. Installation de fusion suivant la revendication 23, caractérisée en ce que le portique (42) mobile porte le dispositif de soulèvement et d'abaissement (8) des électrodes.

25. Installation de fusion suivant l'une des revendications 1 à 24, caractérisée en ce que la cuve (3) de four est fixée dans un cadre (61) supérieur qui s'appuie, par un dispositif de soulèvement de cadre (62), sur un bâti-support (63).

26. Installation de fusion suivant la revendication 25, caractérisée en ce que le bâti-support (61) est constitué de manière à être mobile.

27. Installation de fusion suivant la revendication 25 ou 26, caractérisée en ce que le dispositif de soulèvement (62) à cadre est formé d'au moins trois éléments de levage (70, 71) répartis au pourtour du cadre (61).

28. Installation de fusion suivant la revendication 27, caractérisée en ce que les éléments de levage (70, 71) sont constitués d'unités à piston et cylindre hydrauliques ou pneumatiques.

29. Installation de fusion suivant l'une des revendications 25 à 28 en liaison avec la revendication 21, caractérisée en ce que les éléments de levage (70, 71) sont disposés des deux côtés de l'axe (22) reliant la ligne médiane du dispositif de préchauffage (2) de la charge au centre de la sole (4) du four, et l'élément de levage (71) ou les éléments de levage (71) d'un côté sont montés basculants à la fois dans le cadre (61) et dans le bâti-support (63) autour d'axes de basculement parallèles à l'axe (22), tandis que l'élément de levage ou les éléments de levage de l'autre côté ont un guidage (72) vertical.

30. Installation de fusion suivant l'une des revendications 25 à 29, caractérisée en ce que le bâti-support (63) comporte deux traverses (67, 68) parallèles et un longeron (69) les reliant à peu près au milieu.

31. Installation de fusion suivant la revendication 30 en liaison avec la revendication 21, caractérisée en ce que le longeron (69) s'étend parallèlement à l'axe (22).

32. Installation de fusion suivant l'une des revendications 27 à 31, caractérisée en ce que le cadre (61) est constitué en vue en plan en étant sensiblement rectangulaire, et les éléments de levage (70, 71) sont disposés dans la partie des sommets de ce cadre.

33. Installation de fusion suivant l'une des revendications 30 à 32, caractérisée en ce que le bâti-support (63) comporte des roues (57) dans les parties d'extrémité de l'une des traverses (67) et dans la partie centrale de l'autre traverse (68).

34. Installation de fusion suivant l'une des revendications 30 à 33, caractérisée en ce que le cadre (61) est coudé du côté de la piquée de la cuve du four vers le haut et du côté de l'ouverture pour les scories, vers le bas.

35. Installation de fusion suivant l'une des revendications 25 à 34, caractérisée en ce que la construction servant de support (27) est à poste fixe.
